# EUROPEAN PATENT APPLICATION

(11) **EP 0 522 851 A1**
(43) Date of publication of application: **13.01.1993**
(21) Application number: 92306293.9
(22) Date of filing: 09.07.1992
(51) Int. Cl.: B62D 53/08

(54) **Anti jack-knife mechanism**

(30) Priority: 10.07.1991 GB 9114914
(71) Applicant: Clarke, James Horace, Skegness, Lincolnshire PE24 5QA (GB)
(72) Inventor: Clarke, James Horace, Skegness, Lincolnshire PE24 5QA (GB)
(74) Representative: Craske, Stephen Allan

(57) **Abstract**

In an articulated tractor and trailer vehicle a thrust pickup plate 21 is mounted beneath the turntable 7 of the tractor. When the vehicle is braked the thrust of the trailer acting through the king pin is transmitted via the thrust plate 21 and struts 28, 29 to a forward region 31, 32 of the tractor. In an alternative arrangement the thrust is applied directly to the turntable 7 which is coupled to the struts 28, 29.

## Description

### TECHNICAL FIELD OF THE INVENTION

This invention relates to a mechanism for reducing or eliminating the occurrence of jack-knifing.

### BACKGROUND

Jack-knifing is the name used to describe what happens when the tractor and trailer units of an articulated vehicle swing rapidly round on their pivotal coupling causing the vehicle to go out of control. This can cause considerable damage to the vehicle and presents a serious hazard to other road users.

Several methods of preventing jack-knifing have already been proposed, with varying degrees of success.

One method is to fit a mechanical or electronic anti-lock system to the rear wheels of the tractor so that they cannot lock and give rise to conditions which promote jack-knifing.

A second method is to arrange the characteristics of the braking system such that if the rear wheels of the tractor unit should lock they only do so after the front wheels of the tractor have already locked. This can be achieved by the use of load-sensitive brake valves.

A third method is to introduce resistance to pivotal movement of the coupling between the tractor and trailer so that this resistance must be overcome before a jack-knife can take place. In one particular device of this kind the pivotal coupling is provided with a disc brake (hence the term "fifth wheel" which is often applied to the coupling) so that pivotal movement between tractor and trailer can only take place against the torque applied by the brake.

### SUMMARY OF THE INVENTION

The present invention takes a totally different approach to the solution of the jack-knife problem, and deals with the thrust generated by the momentum of the trailer which accumulates in the king pin of the tractor-trailer coupling when the vehicle brakes are applied, and the subsequent effect upon the balance of the tractor unit.

It is now proposed that the rearward end of the tractor is provided with a thrust member for accepting forward thrust from the king pin, and the tractor includes strut means coupling the thrust member to a region located at the forward end of the tractor so as to transmit said forward thrust from the king pin to said forward region of the tractor.

By thus diverting the thrust of the trailer to the forward end of the tractor during braking it has been found that the propensity to jack-knife can be substantially reduced.

### BRIEF DESCRIPTION OF THE DRAWINGS

The invention is exemplified in the accompanying drawings, in which:
Figure 1 is a plan view of the chassis of a tractor unit provided with a coupling arrangement of the invention,
Figure 2 is a side view of the chassis and coupl ing arrangement,
Figure 3 is a diagrammatic plan view of an articulated vehicle, incorporating the tractor unit, in a typical jack-knife situation,
Figure 4 is a rear view of a modified coupling arrangement,
Figure 5 is a side view of the modified coupling arrangement, and
Figure 6 is an enlarged detail of Fig. 4.

### DETAILED DESCRIPTION OF THE DRAWINGS

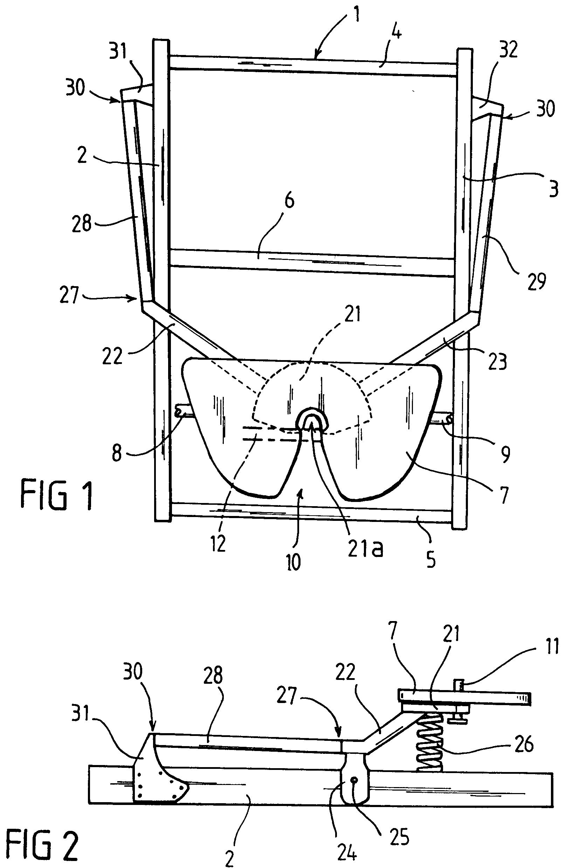

Referring to Fig.s 1 and 2, the tractor unit of an articulated vehicle has a chassis 1 which includes parallel side members 2, 3 and front, rear and middle transverse members 4, 5 and 6. Towards the rearward end of the chassis a turntable 7 (the "fifth wheel") is tiltably mounted by means of laterally projecting aligned pivot pins 8 and 9. This turntable 7 contains a rearwardly directed slot 10 for reception of a king pin 11 (Fig. 2 only) of a trailer unit (not shown) which moves into the slot during coupling of the tractor and trailer. The king pin 11 is retained at the forward end of the slot 10 by a locking bolt 12 such that the king pin is able to rotate about a substantially vertical axis, thereby permitting pivotal movement (articulation) to take place between the tractor and trailer.

A thrust pickup plate 21 is mounted below the turntable 7. This plate 21 includes a rearwardly projecting slot 21a (Fig. 1) to register with the original shape of the turntable slot 10 which is enlarged at its forward end so that forward thrust of the king pin 11 is applied to the pickup plate 21 alone.

The pickup plate 21 is joined to a pair of forwardly divergent and downwardly inclined arms 22 and 23, and a pivot plate 24 (Fig. 2) depends from the forward end of each arm to overlie the outer faces of the chassis side members 2 and 3. These pivot plates 24 are pivotally coupled to the chassis side members by substantial pivot pins 25, e.g. bolts with self locking nuts, for movement about a transverse pivot axis. It should be noted that the pivot points are located about one third of the way down the vertical depth of the chassis side members 2 and 3, but the lower edges of the pivot plates 24 are located some way below the pivot points, approximately level with the lower edges of the chassis side members. This arrangement optimises the strength of the pivotal connections, the depending part of the pivot plate below the pivot pin acting to counter lateral forces acting on the pivotal connection.

The pickup plate 21 is biassed upwardly into contact with the underside of the turntable 7 by means of a compression spring 26 which acts between any suitable structural part of the tractor and the underside of the pickup plate.

The forward ends of the arms 22 and 23 are pivotally coupled by universal-type joints 27 to respective forwardly directed struts 28 and 29. By way of example, the joints 27 could be in the form of short spigots which are a relatively loose fit in corresponding sockets formed in the ends of the struts. The forward ends of the struts 28 and 29 are in turn pivotally coupled by further universal-type joints 30, which may be of similar form to the joints 27, to abutment members 31 and 32 which are rigidly coupled to the outer faces of the chassis side members 2 and 3 at positions which are disposed forwardly of the centre of mass of the tractor.

The pickup plate 21 is able to rise and fall with the turntable under normal driving conditions. When the vehicle has its brakes applied the forward thrust of the trailer acting through the king pin 11 urges the pickup plate 21 forwardly and the forward thrust is thus transmitted via the arms 22 and 23, struts 28 and 29 and abutments 31 and 32 to the front of the chassis. This has the effect of the tractor being pulled instead of pushed.

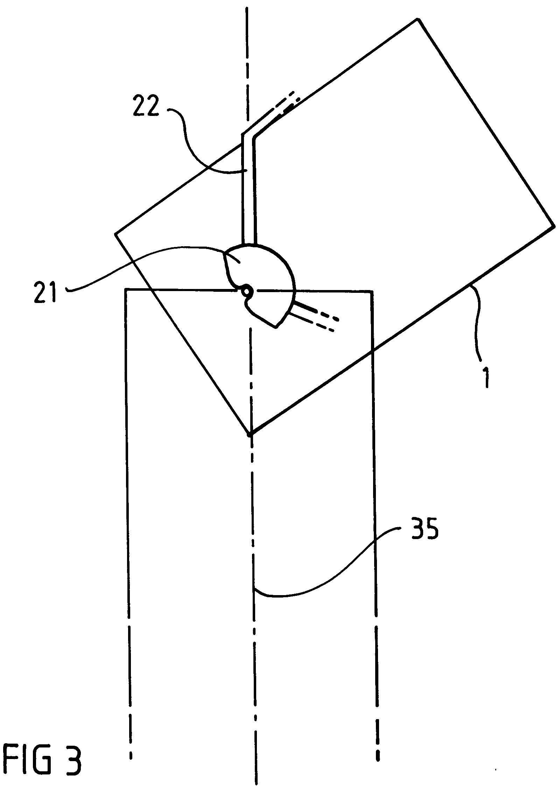

Fig. 3 illustrates a situation where the tractor is disposed at an angle of about 55° to the front-rear axis of the vehicle. In this situation the thrust of the trailer acts directly along one of the arms 22 to the pivot plate 24 and pin 25, at which point the chassis absorbs some 30% of the thrust. The remaining 70% acts via the strut 28 on the forward end of the chassis. At this degree of angular movement the mechanism is at its limit of effective operation; further angular movement would put both arms 22 and 23 to one side of the king pin. It is, of course, unlikely that the vehicle would be travelling at high speeds at such an angle, and braking in this configuration is therefore unlikely to result in a jack-knife. Jack-knifing is most likely to occur when the vehicle is travelling at high speed along a straight path, or substantially so, and it is in such circumstances that the present mechanism is at its most effective.

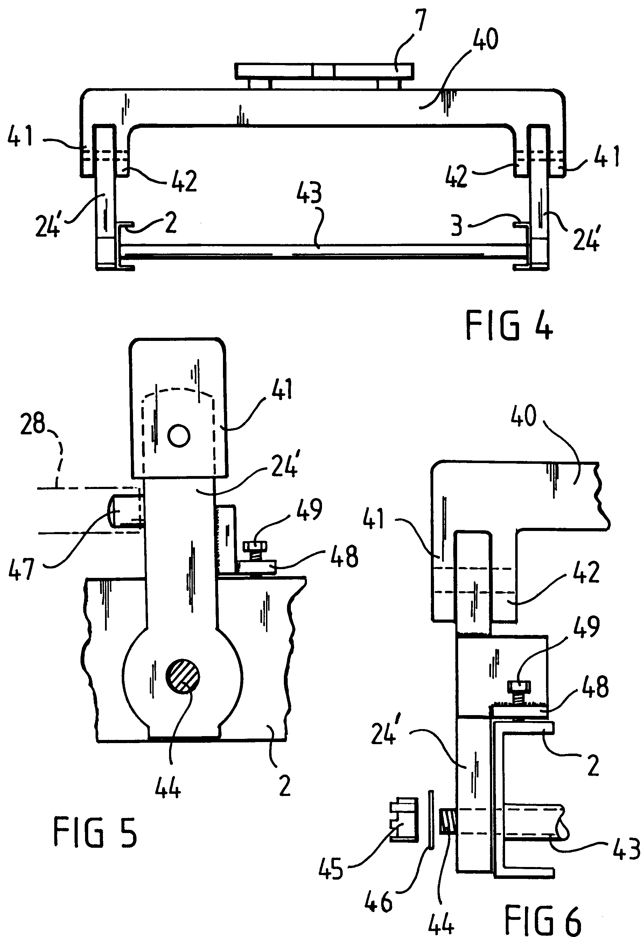

Fig.s 4 to 6 show an alternative arrangement in which the turntable itself takes up the braking thrust from the king pin. The turntable 7 is of conventional form and is mounted on a transverse cross beam 40. At each end of the beam 40 there are a pair of depending lugs 41, 42, between which is secured a respective pivot plate 24′. The two pivot plates 24′ overlie the outer faces of the chassis side members 2 and 3. A tube 43 is secured between the side members 2 and 3, about two thirds of the way down their height, to receive a pivot rod 44 (Fig. 6). This pivot rod projects at each end through the respective pivot plates 24′ and is secured by a castle-type locknut and washer, 45, 46 respectively.

The forward edges of the pivot plates 24′ are provided with spigots 47 which pivotally engage the struts 28 and 29 of Fig.s 1 and 2. The rearward edges of the pivot plates 24′ are provided with flanges 48 which overlie the respective side members 2, 3, and adjustable stops in the form of bolts 49 are inserted through the flanges to act against the top faces of the side members 2 and 3. Thus, during normal use of the vehicle the stops 49 prevent rearward movement of the turntable 7. However, when the vehicle brakes are applied the forward thrust of the king pin acting on the turntable 7 tends to cause the turntable to pivot in a forward direction about the rod 44. In practice the amount of pivotal movement of the plates 24′ will be very small, but sufficient to transmit the forward thrust via the struts 28 and 29 to the front of the tractor chassis.

Each mechanism described above substantially reduces or even eliminates the propensity of the vehicle to jack-knife during most braking situations that would otherwise be likely to result in a jack-knife.

## Claims

1. A coupling arrangement for the tractor and trailer of an articulated vehicle in which the trailer has a king pin about which pivotal movement takes place,
characterised in that the rearward end of the tractor is provided with a thrust member (21; 7) for accepting forward thrust from the king pin, and the tractor includes strut means (28, 29) coupling the thrust member to a region located at the forward end of the tractor so as to transmit said forward thrust from the king pin to said forward region of the tractor.

2. A coupling arrangement according to Claim 1, in which the thrust member (21; 7) is mounted for forward movement relative to the tractor chassis.

3. A coupling arrangement according to Claim 2, in which the thrust member (21; 7) is pivotally coupled to the tractor chassis for movement about a transverse axis.

4. A coupling arrangement according to Claim 1, 2 or 3, in which the thrust member (21; 7) comprises a rearwardly open slot (21a) for receiving the king pin.

5. A coupling arrangement according to Claim 4, in which the thrust member comprises a turntable (7).

6. A coupling arrangement according to Claim 4, in which the thrust member (21) is mounted beneath a turntable (7) which also has a slot (10) for receiving the king pin.

7. A coupling arrangement according to any preceding claim, in which the strut means comprises a pair of strut members (28, 29) for transmitting thrust to spaced regions on opposite sides of the tractor.

8. A coupling arrangement according to Claim 7, in which the thrust member (21; 7) is pivotally coupled to the strut members (28, 29).

9. A coupling arrangement according to Claim 7 or 8, in which the strut members (28, 29) are pivotally coupled to the chassis at the respective spaced forward regions.
